# EUROPEAN PATENT SPECIFICATION

(11) **EP 2 895 361 B1**
(45) Date of publication and mention of the grant of the patent: **21.04.2021**
(21) Application number: 13801840.3
(22) Date of filing: 16.09.2013
(51) Int. Cl.: B60T 3/00, F16B 7/20, F16B 21/04

(54) **SUPPORTING AND LOCKING SYSTEM FOR A TOOL, SUCH AS A WHEEL CHOCK**
STÜTZ- UND VERRIEGELUNGSSYSTEM FÜR EIN WERKZEUG, Z. B. EINEN RADUNTERLEGKEIL
SYSTÈME DE SUPPORT ET DE VERROUILLAGE POUR UN OUTIL, PAR EXEMPLE UNE CALE DE ROUE

(30) Priority: 17.09.2012 IT RM20120441
(43) Date of publication of application: 22.07.2015
(73) Proprietor: Lokhen S.r.l., 70022 Altamura, Bari (IT)
(72) Inventor: LORUSSO, Lorenzo, 70022 Altamura BARI (IT)
(74) Representative: Mitola, Marco
(86) International application number: PCT/IT2013/000249
(87) International publication number: WO 2014/041578

(56) References cited:
- DE-C1- 19 707 373
- DE-U1- 9 407 118
- GB-A- 1 528 754
- US-A- 4 887 929
- US-B1- 6 336 766

## Description

The present invention relates to a supporting and locking system for a tool and relative supporting and locking device.

More specifically, the invention concerns a system of the above kind, studied and realized in particular to support and to block a parking wheel chock to the chassis of a vehicle, but which can be used for any type of tool, for which the supporting and locking function to a chassis of a vehicle is necessary.

In the following, the description will be directed to a system comprising a stationing wheel chock and a supporting and locking device that is mounted on the chassis of lorries, trailers, semi-trailers, trucks and the like, but it is clear that the same should not be considered limited to this specific use.

As it is well known, the wheel chocks are primarily used for blocking the wheels of vehicles such as lorries, trailers, semi-trailers, trucks and the like, to prevent receding when stationed on sloping roads.

These vehicles are then equipped with wheel chocks fixed to its chassis, in order to use it when necessary.

At present, supporting and locking devices for wheel chocks are commercially available typically in metallic material with circular shape and comprised of a plurality of elements, such as rings, pins and cotter pins, for fixing the wheel chock to the chassis of the vehicle.

The known systems are also disclosed in the following patent applications DE 19707373 C1, GB 1528754 A and DE 9407118 U1.

A further coupler assembly is disclosed in US 4887929 A.

If required, it is necessary to remove these elements, for example, release rings, piston pins, cotter pins from the support, to remove the wheel chock from the chassis.

Furthermore, the user, typically the driver of the vehicle, must store these items, use the wheel chock and then reposition the wheel chock on the support, by assembling the elements again in the fixing position.

It appears evident that this procedure is costly in terms of the time required to disassemble and reassemble the elements.

Another disadvantage is represented by the possibility of losing one of the support elements, which, having reduced dimensions and being placed randomly after disassembly, can be easily lost.

Another disadvantage of the supports for existing circular shape metal wheel chocks is the fact that, as they are circular in shape, it is not possible to maintain a fixed position in the wheel chock, and this causes the rotation and the oscillation of the same during the motion of the vehicle around the support.

A further disadvantage of the wheel chocks supports is represented by the low resistance of the metal to corrosion due to atmospheric agents, to which the vehicles are subject on the road and parked in open environments.

In light of the above, it is, therefore, object of the present invention to provide a wheel chock system and supporting and locking device thereof that facilitates the assembly and disassembly operations .

Another object of the invention is to provide a single device which does not include a plurality of elements.

Another object of the invention is to provide a device which, by its shape, allows avoiding the oscillations and rotations of the wheel chock during the motion of the vehicle.

Further object of the present invention is to provide a system with high resistance to corrosion.

These and other results are achieved according to the invention with a wheel chock system and the relative supporting and locking device, made of thermoplastic material, wherein the device is made of a single piece.

It is therefore a specific object of the present invention a supporting and locking system for a tool, comprising: a tool having a through inner channel; and a supporting and locking device comprising an elongated element, having a first end and a second end, said elongated element being insertable in said through channel, coupling means of said supporting and locking device for coupling it to a chassis of a vehicle, said coupling means being arranged on said first end; said system being characterized in that it comprises a locking member, arranged on said second end of said elongated element, that cannot be uncoupled from said elongated element, said locking member being adapted to lock said tool when said elongated element is inserted in said through channel.

Still according to the invention, said locking member could be capable to assume in a first locking position, in which it prevents said elongated element from going out from said through channel of said tool, when said elongated element is inserted in said through channel, and a second open position, in which said tool can be extracted from said elongated element.

Always according to the invention, said locking member could be rotatably coupled with said second end.

Further according to the invention, said locking member could comprise a relief such that, when said locking member is in said locking position, said relief is misaligned with respect to said through channel and when said locking member is in said open position, said relief is aligned to said through channel.

According to the invention, said elongated element comprises a longitudinal projection, which projects along all the length of said elongated element and it is insertable in said through channel of said tool.

Still according to the invention, in said locking position of said locking member, said longitudinal projection is misaligned with respect to said relief, while in the open position of said locking member, said longitudinal projection is aligned to said elongated relief.

Further according to the invention, said locking member could comprise a step, and said elongated element could have a slot on a part of the outer surface of said elongated element near said second end, said slot having an initial stroke end and a stop end and said step being slidingly engaged with said slot, such that, when said locking member is in said locking position, said step is abutted on said stop end of said slot, while when said locking member is in said open position, said step is abutted on said initial stroke end of said slot.

Preferably according to the invention, said coupling means could have an inner threaded recess, suitable for engaging by screwing to a respective screw tap member on the chassis of said vehicle.

Still according to the invention, said tool could be a parking wheel chock for vehicles.

Still according to the invention, said device can be made in thermoplastic material and/or thermosetting.

The present invention will be now described, for illustrative but not limitative purposes, according to its preferred embodiments, with particular reference to the figures of the enclosed drawings, wherein:
figure 1 shows a side view of the wheel chock system and the relative supporting and locking device according to the present invention;
figure 2 shows a front view of the system of figure 1;
figure 3 shows a top plan view of the system of figure 1;
figure 4 shows a perspective view of the system of figure 1;
figure 5 shows a side view of the supporting and locking device according to the present invention;
figure 6 shows a sectional view taken along the line A-A of the device of figure 5;
figure 7 shows a front view of the device of figure 5;
figure 8 shows a locking member of the supporting and locking device according to the present invention;
figure 9 shows a sectional view taken along the section line B-B of the locking member according to figure 8;
figure 10 shows a sectional view along line B-B of the locking member according to figure 8;
figure 11 shows a sectional view along the line A-A of the supporting and locking device according to the present invention.

In the various figures, similar parts will be indicated by the same reference numbers.

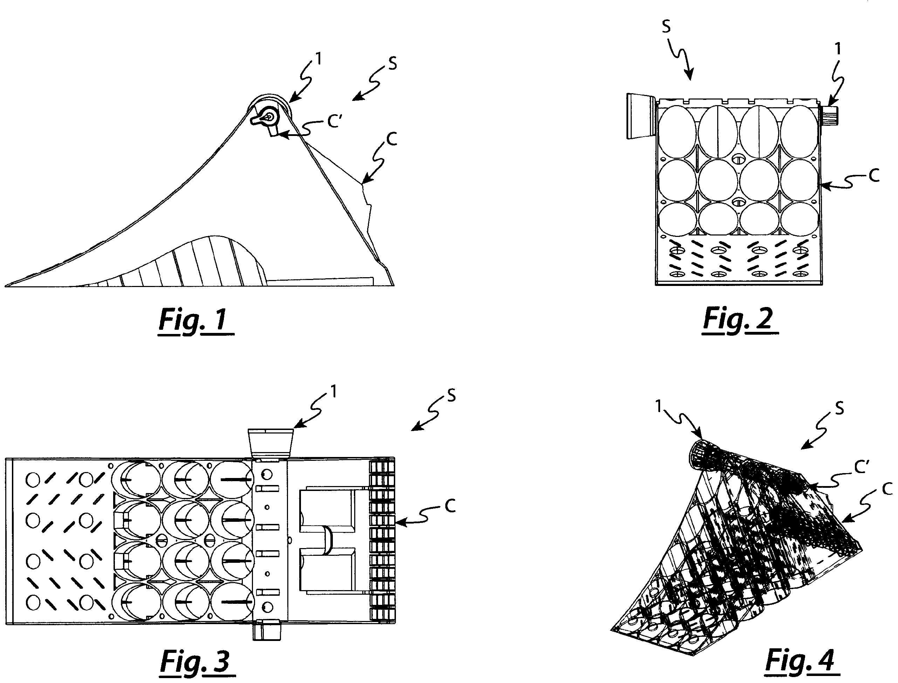

With reference to figures 1-4, the system S comprising a wheel chock C and the supporting and locking device 1 are shown.

The wheel chock C has inside a through channel C', in which said supporting and locking device 1 is insertable.

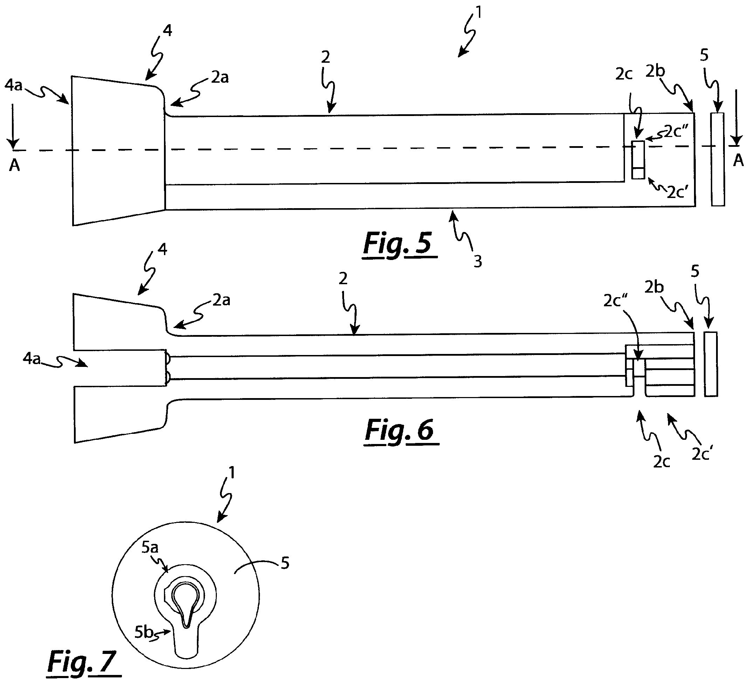

In figures 5-7 the supporting and locking device 1 is shown in detail, which comprises an elongated element 2 with circular cross section and hollow inside.

Said elongated element 2 comprises a longitudinal projection 3, which extends along the whole length of said elongated element 2, whose function will be described later. The elongated element 2 also comprises a first end 2a and a second end 2b. On said first end 2a coupling means 4 are arranged between the supporting and locking device 1 and the chassis of a vehicle.

Said coupling means 4 have a threaded inner cavity 4a, adapted to engage by screwing with a respective male element on the chassis of said vehicle.

Said elongated element 2 comprises a locking member 5 connected on said second end 2b such that it cannot be uncoupled. In particular, in the present embodiment of the system according to the present invention, said locking member 5 is rotatably coupled with said second end 2b, by means of a bayonet type coupling.

Close to the second end 2b, the elongate element 2 also has a slot 2c, obtained on a part of the outer surface of said elongated element 2, having an initial stroke end and a stop end 2c".

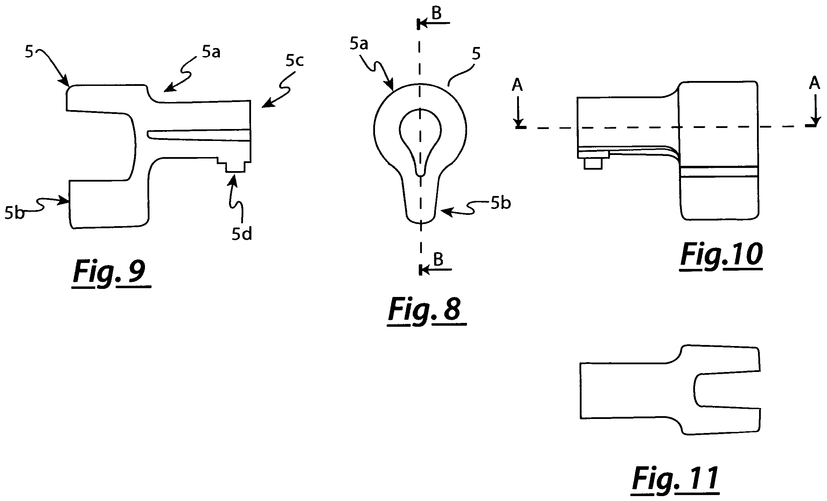

With reference to figures 8-11, now the structure of the locking member 5, which has a circular shaped main body 5a and a relief 5b, is described.

Main body 5a is firmly inserted, as mentioned, within said elongate element 2 in correspondence with the end 2b.

The bayonet coupling between the locking member 5 and the elongate element 2 is achieved by inserting the step 5d, placed close to the end 5c of the main body 5a, into the slot 2c, such that the first can slide along the second. In this way, said locking member 5 is rotatably coupled with said end 2b, of said elongate element 2.

Relief 5b allows rotating the locking member 5 from a locking position to an open position of the supporting and locking device 1.

Supporting and locking device 1 of the system S is in the locking position when relief 5b is misaligned with respect to the longitudinal projection 3 that is inserted within the through channel C'. In this locking position, step 5d is in abutment on the stop end 2c" of the slot 2c.

Supporting and locking device 1 of the system S is, then, in the open position when the relief 5b is aligned in correspondence with the longitudinal projection 3, while it is still inserted within the through channel C'. Moreover, in this open position, step 5d is in abutment on the initial stroke end 2c' of the slot 2c.

The operation of the system S described above is as follows.

The supporting and locking device 1 is normally fixed on a vehicle chassis in the locking position in which, as described above, the elongate element 2 is inserted into the through channel C' of the wheel chock C, so that the projection 3 passes inside the longitudinal through channel C' of the same wheel chock C, the relief 5b of the locking member 5 may be misaligned with respect to the longitudinal projection 3 and the step 5d is in abutment on the initial stroke end 2c' of the slot 2c.

When there is the need to extract the wheel chock C from the supporting and locking device 1, it is necessary to bring the supporting and locking device 1 in open position, i.e. rotating clockwise or counterclockwise the locking member 5, bringing the relief 5b aligned in correspondence of said longitudinal projection 3 and bringing the step 5d in abutment on the initial stroke end 2c' of the slot 2c.

At this point, it is possible to easily remove the wheel chock C from the supporting and locking device 1, sliding the through channel C' along the longitudinal projection 3 and the relief 5b. The supporting and locking device 1 is thus completely mounted on the chassis of the vehicle, with no part of this that has been disassembled.

The supporting and locking device 1 is preferably entirely made of thermoplastic polymer and/or thermosetting material such as polypropylene, polyethylene, nylon or ABS.

From this description, it is evident that the supporting and locking device 1 can be easily opened just by rotating the locking member 5, which is not uncoupleable from the elongated element 2, thus eliminating the risk of losing components of the supporting and locking device 1 itself.

Furthermore, the particular used material makes the supporting and locking device 1 more resistant to atmospheric agents.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Supporting and locking system (S) for at least one tool (C) comprising:
- at least one tool (C) having a through channel (C') and
- a supporting and locking device (1) for said at least one tool (C), such as a wheel chock or the like, said supporting and locking device (1) comprising an elongated element (2), having a first end (2a) and a second end (2b), said elongated element (2) being insertable inside said through channel (C'), coupling means (4) of said supporting and locking device (1) for coupling with a chassis of a vehicle, said coupling means (4) being arranged on said first end (2a) of said elongated element (2), said device (1) comprising a locking member (5), arranged on said second end (2b) of said elongated element (2), that cannot be uncoupled from said elongated element (2), said locking member (5) being adapted to lock said tool (C) when said elongated element (2) is inserted in said through channel (C'), said device (1) being **characterized in that** said elongated element (2) further comprises a longitudinal projection (3), which projects along all the length of said elongated element (2) and it is insertable in said through channel (C') of said tool (C).

2. Supporting and locking system (S) according to claim 1, **characterized in that** said locking member (5) is capable to assume in a first locking position, in which it prevents said elongated element (2) from going out from said through channel (C') of said tool (C), when said elongated element (2) is inserted in said through channel (C'), and a second open position, in which said tool (C) can be extracted from said elongated element (2) .

3. Supporting and locking system (S) according to anyone of the preceding claims, **characterized in that** said locking member (5) is rotatably coupled with said second end (2b).

4. Supporting and locking system (S) according to anyone of the preceding claims, **characterized in that** said locking member (5) comprises a relief (5b) such that, when said locking member (5) is in said locking position, said relief (5b) is misaligned with respect to said through channel (C') and when said locking member (5) is in said open position, said relief (5b) is aligned to said through channel (C').

5. Supporting and locking system (S) according to claim 4, **characterized in that**, in said locking position of said locking member (5), said longitudinal projection (3) is misaligned with respect to said relief (5b), while in the open position of said locking member (5), said longitudinal projection (3) is aligned to said elongated relief (5b).

6. Supporting and locking system (S) according to anyone of the preceding claims, **characterized in that** said locking member (5) comprises a step (5d), and **in that** said elongated element (2) has a slot (2c) on a part of the outer surface of said elongated element (2) near said second end (2b), said slot (2c) having an initial stroke end (2c') and a stop end (2c") and said step (5d) being slidingly engaged with said slot (2c), such that, when said locking member (5) is in said locking position, said step (5d) is abutted on said stop end (2c") of said slot (2c), while when said locking member is in said open position, said step (5d) is abutted on said initial stroke end (2c') of said slot (2c).

7. Supporting and locking system (S) according to anyone of the preceding claims, **characterized in that** said coupling means (4) have an inner threaded recess (4a), suitable for engaging by screwing to a respective screw tap member on the chassis of said vehicle.

8. Supporting and locking system (S) according to anyone of the preceding claims, **characterized in that** said tool (C) is a parking wheel chock for vehicles.

9. Supporting and locking system (S) according to anyone of the preceding claims, **characterized in that** the supporting and locking device (1) is made in thermoplastic material and/or thermosetting.

## Patentansprüche

1. Stütz- und Verriegelungssystem (S) für zumindest ein Werkzeug (C), aufweisend:
- zumindest ein Werkzeug (C) mit einem Durchgangskanal (C'), und
- eine Stütz- und Verriegelungsvorrichtung (1) für das zumindest eine Werkzeug (C), wie etwa einen Radunterlegkeil oder dergleichen, wobei die Stütz- und Verriegelungsvorrichtung (1) ein längliches Element (2) mit einem ersten Ende (2a) und einem zweiten Ende (2b), wobei das längliche Element (2) ins Innere des Durchgangskanals (C') einschiebbar ist, Kopplungsmittel (4) der Stütz- und Verriegelungsvorrichtung (1) zur Kopplung mit einem Chassis eines Fahrzeugs aufweist, wobei die Kopplungsmittel (4) an dem ersten Ende (2a) des länglichen Elements (2) angeordnet sind, wobei die Vorrichtung (1) ein Verriegelungselement (5) aufweist, das an dem zweiten Ende (2b) des länglichen Elements (2) angeordnet ist, das nicht von dem länglichen Element (2) entkoppelt werden kann, wobei das Verriegelungselement (5) eingerichtet ist, das Werkzeug (C) zu verriegeln, wenn das längliche Element (2) in den Durchgangskanal (C') eingeschoben wird, wobei die Vorrichtung (1) **dadurch gekennzeichnet ist, dass** das längliche Element (2) ferner einen Längsvorsprung (3) aufweist, der über die gesamte Länge des länglichen Elements (2) vorsteht und es in den Durchgangskanal (C') des Werkzeugs (C) einschiebbar ist.

2. Stütz- und Verriegelungssystem (S) nach Anspruch 1, **dadurch gekennzeichnet, dass** das Verriegelungselement (5) in der Lage ist, eine erste Verriegelungsposition einzunehmen, in der es verhindert, dass das längliche Element (2) den Durchgangskanal (C') des Werkzeugs (C) verlässt, wenn das längliche Element (2) in den Durchgangskanal (C') eingeschoben ist, und eine zweite offene Position einzunehmen, in der das Werkzeug (C) aus dem länglichen Element (2) entnommen werden kann.

3. Stütz- und Verriegelungssystem (S) nach einem der vorstehenden Ansprüche, **dadurch gekennzeichnet, dass** das Verriegelungselement (5) mit dem zweiten Ende (2b) drehbar gekoppelt ist.

4. Stütz- und Verriegelungssystem (S) nach einem der vorstehenden Ansprüche, **dadurch gekennzeichnet, dass** das Verriegelungselement (5) eine Freigabeeinrichtung (5b) aufweist, so dass die Freigabeeinrichtung (5b) in Bezug auf den Durchgangskanal (C') fehlausgerichtet ist, wenn das Verriegelungselement (5) in der Verriegelungsposition ist, und die Freigabeeinrichtung (5b) mit dem Durchgangskanal (C') fluchtet, wenn das Verriegelungselement (5) in der offenen Position ist.

5. Stütz- und Verriegelungssystem (S) nach Anspruch 4, **dadurch gekennzeichnet, dass** in der Verriegelungsposition des Verriegelungselements (5) der Längsvorsprung (3) in Bezug auf die Freigabeeinrichtung (5b) fehlausgerichtet ist, wohingegen in der offenen Position des Verriegelungselements (5), der Längsvorsprung mit der länglichen Freigabeeinrichtung (5b) fluchtet.

6. Stütz- und Verriegelungssystem (S) nach einem der vorstehenden Ansprüche, **dadurch gekennzeichnet, dass** das Verriegelungselement (5) eine Stufe (5d) aufweist, und dass das längliche Element (2) an einem Teil der Außenfläche des länglichen Elements (2) nahe des zweiten Endes (2b) einen Schlitz (2c) aufweist, wobei der Schlitz (2c) ein Anfangshubende (2c') und ein Anschlagsende (2c") aufweist und die Stufe (5d) in verschiebbarem Eingriff mit dem Schlitz (2c) steht, so dass, wenn das Verriegelungselement (5) in der Verriegelungsposition ist, die Stufe (5d) an dem Anschlagsende (2c") des Schlitzes (2c) anliegt, wohingegen wenn das Verriegelungselement in der offenen Position ist, die Stufe (5d) an dem Anfangshubende (2c') des Schlitzes (2c) anliegt.

7. Stütz- und Verriegelungssystem (S) nach einem der vorstehenden Ansprüche, **dadurch gekennzeichnet, dass** die Kopplungsmittel (4) eine Innengewindeaussparung (4a) aufweisen, die sich zur Wirkverbindung mittels Schrauben an ein jeweiliges Schraubverschlussstück am Chassis des Fahrzeugs eignet.

8. Stütz- und Verriegelungssystem (S) nach einem der vorstehenden Ansprüche, **dadurch gekennzeichnet, dass** das Werkzeug (C) ein Parkunterlegkeil für Fahrzeuge ist.

9. Stütz- und Verriegelungssystem (S) nach einem der vorstehenden Ansprüche, **dadurch gekennzeichnet, dass** die Stütz- und Verriegelungsvorrichtung (1) aus thermoplastischem und/oder duroplastischem Material hergestellt ist.

## Revendications

1. Système de support et de verrouillage (S) pour au moins un outil (C) comprenant :
- au moins un outil (C) ayant un conduit traversant (C') et
- un dispositif (1) de support et de verrouillage pour ledit au moins un outil (C), tel qu'une cale de roue ou autre, ledit dispositif (1) de support et de verrouillage comprenant un élément allongé (2), ayant une première extrémité (2a) et une seconde extrémité (2b), ledit élément allongé (2) étant insérable à l'intérieur dudit conduit traversant (C'), des moyens d'accouplement (4) dudit dispositif (1) de support et de verrouillage pour s'accoupler à un châssis d'un véhicule, lesdits moyens d'accouplement (4) étant agencés sur ladite première extrémité (2a) dudit élément allongé (2), ledit dispositif (1) comprenant un organe de verrouillage (5), agencé sur ladite seconde extrémité (2b) dudit élément allongé (2), qui ne peut pas être découplé dudit élément allongé (2), ledit organe de verrouillage (5) étant adapté pour verrouiller ledit outil (C) lorsque ledit élément allongé (2) est inséré dans ledit conduit traversant (C'), ledit dispositif (1) étant **caractérisé en ce que** ledit élément allongé (2) comprend en outre une saillie longitudinale (3), qui fait saillie le long de toute la longueur dudit élément allongé (2) et est insérable dans ledit conduit traversant (C') dudit outil (C).

2. Système de support et de verrouillage (S) selon la revendication 1, **caractérisé en ce que** ledit organe de verrouillage (5) est capable d'adopter une première position de verrouillage, dans laquelle il empêche ledit élément allongé (2) de sortir dudit conduit traversant (C') dudit outil (C), lorsque ledit élément allongé (2) est inséré dans ledit conduit traversant (C'), et une seconde position ouverte, dans laquelle ledit outil (C) peut être extrait dudit élément allongé (2).

3. Système de support et de verrouillage (S) selon l'une quelconque des revendications précédentes, **caractérisé en ce que** ledit organe de verrouillage (5) est accouplé de manière rotative à ladite seconde extrémité (2b).

4. Système de support et de verrouillage (S) selon l'une quelconque des revendications précédentes, **caractérisé en ce que** ledit organe de verrouillage (5) comprend un relief (5b) de sorte que, lorsque ledit organe de verrouillage (5) est dans ladite position de verrouillage, ledit relief (5b) est décalé par rapport audit conduit traversant (C') et lorsque ledit organe de verrouillage (5) est dans ladite position ouverte, ledit relief (5b) est aligné sur ledit conduit traversant (C').

5. Système de support et de verrouillage (S) selon la revendication 4, **caractérisé en ce que**, dans ladite position de verrouillage dudit organe de verrouillage (5), ladite saillie longitudinale (3) est décalée par rapport audit relief (5b), tandis que dans la position ouverte dudit organe de verrouillage (5), ladite saillie longitudinale (3) est alignée sur ledit relief (5b) allongé.

6. Système de support et de verrouillage (S) selon l'une quelconque des revendications précédentes, **caractérisé en ce que** ledit organe de verrouillage (5) comprend une marche (5d), et **en ce que** ledit élément allongé (2) a une rainure (2c) sur une partie de la surface extérieure dudit élément allongé (2) près de ladite seconde extrémité (2b), ladite rainure (2c) ayant une extrémité de course initiale (2c') et une extrémité d'arrêt (2c") et ladite marche (5d) étant mise en prise de manière coulissante avec ladite rainure (2c), de sorte que, lorsque ledit organe de verrouillage (5) est dans ladite position de verrouillage, ladite marche (5d) vient en butée sur ladite extrémité d'arrêt (2c") de ladite rainure (2c), tandis que lorsque ledit organe de verrouillage est dans ladite position ouverte, ladite marche (5d) vient en butée sur ladite extrémité de course initiale (2c') de ladite rainure (2c).

7. Système de support et de verrouillage (S) selon l'une quelconque des revendications précédentes, **caractérisé en ce que** lesdits moyens d'accouplement (4) ont un évidement fileté intérieur (4a), approprié pour venir en prise par vissage avec un organe taraud respectif sur le châssis dudit véhicule.

8. Système de support et de verrouillage (S) selon l'une quelconque des revendications précédentes, **caractérisé en ce que** ledit outil (C) est une cale de roue en stationnement pour véhicules.

9. Système de support et de verrouillage (S) selon l'une quelconque des revendications précédentes, **caractérisé en ce que** le dispositif (1) de support et de verrouillage est fait dans un matériau thermoplastique et/ou thermodurcissable.
